# EUROPÄISCHE PATENTSCHRIFT

(11) **EP 3 511 952 B1**
(45) Veröffentlichungstag und Bekanntmachung des Hinweises auf die Patenterteilung: **14.10.2020**
(21) Anmeldenummer: 18020513.0
(22) Anmeldetag: 18.10.2018
(51) Int. Cl.: H01B 7/42, H01R 13/00, B60L 53/10

(54) **SCHNELLLADESTATION MIT LADEKABEL UND TEMPERIERVORRICHTUNG FÜR DAS LADEKABEL**
QUICK CHARGING STATION WITH CHARGING CABLE AND TEMPERATURE REGULATING DEVICE FOR THE CHARGING CABLE
STATION DE RECHARGE RAPIDE AVEC CABLE DE RECHARGE ET DISPOSITIF DE REGULATION DE LA TEMPERATURE POUR LE CABLE DE RECHARGE

(30) Priorität: 15.01.2018 DE 102018100732
(43) Veröffentlichungstag der Anmeldung: 17.07.2019
(73) Patentinhaber: Dr. Ing. h.c. F. Porsche AG, 70435 Stuttgart (DE)
(72) Erfinder: Reber, Volker, 74544 Michelbach a. d. Bilz (DE); Götz, Stefan, 85659 Forstern (DE); Rönfanz, Jari, 75417 Mühlacker (DE)

(56) Entgegenhaltungen:
- US-A1- 2009 256 523
- US-A1- 2015 217 654
- US-A1- 2017 096 073
- US-B2- 9 139 101

## Beschreibung

Die vorliegende Erfindung betrifft eine Ladekabelvorrichtung für eine Schnellladestation zum Schnellladen einer Batterie eines Fahrzeugs mit einem elektrischen Antrieb mit einer Temperiervorrichtung, und einem damit verbundenen Ladekabel, wobei das Ladekabel eine Mehrzahl Fluidleitungen aufweist, die sich von einem der Temperiervorrichtung zugewandten Ende des Ladekabels zu einem der Temperiervorrichtung abgewandten Ende erstrecken, und an dem der Temperiervorrichtung abgewandten Ende miteinander verbunden sind, die Temperiervorrichtung mit den Fluidleitungen des Ladekabels unter Bildung eines Fluidkreislaufs verbunden ist.

Die vorliegende Erfindung betrifft außerdem eine Schnellladestation zum Schnellladen einer Batterie eines Fahrzeugs mit einem elektrischen Antrieb, wobei die Schnellladestation eine obige Ladekabelvorrichtung aufweist, und ein Verfahren zum Betreiben einer solchen Schnellladestation.

Fahrzeuge mit einem elektrischen Antrieb umfassen üblicherweise eine Antriebsbatterie, welche elektrische Energie zum Antrieb des Fahrzeugs bereitstellt. Das Fahrzeug kann ein ausschließlich elektrisch betriebenes Fahrzeug sein, oder ein sogenanntes Hybridfahrzeug, welches neben dem elektrischen Antrieb zusätzlich einen weiteren, konventionellen Antrieb aufweist, typischerweise einen Verbrennungsmotor. Die Antriebsbatterie wird hier auch vereinfacht als Batterie bezeichnet.

Die Antriebsbatterie umfasst dabei meist eine Vielzahl Batteriezellen, die in Reihe und parallel miteinander verschaltet sind, um für den elektrischen Antrieb eine geeignete Kombination aus Strom und Spannung bereitzustellen.

Die Akzeptanz elektrisch angetriebener Fahrzeuge ist derzeit allerdings noch niedrig, da ein Laden der Antriebsbatterie einen langen Zeitraum erfordert. Dabei sind verschiedene Strategien zum Laden der Antriebsbatterie bekannt.

Für ein Laden an einer gewöhnlichen Wechselspannungs- oder Drehstromsteckdose verfügt ein Fahrzeug typischerweise über ein On-bord-Ladegerät, das sowohl eine erforderliche Wandlung von Wechselstrom in Gleichstrom vornimmt, als auch den Ladebetrieb insgesamt steuert. Die Ladesäule ist in diesem Fall also passiv.

Dieser AC-Lademodus ist jedoch aufgrund der verfügbaren Anschlussleistung, die i. d. R. durch eine Versorgungsspannung von 230 V bzw. 400 V und einen Versorgungsstrom von maximal 16 A bzw. 32 A, in seiner Leistung begrenzt. Dadurch ist die Ladegeschwindigkeit beim Laden im AC-Lademodus eingeschränkt, und es können sich bei heutigen Elektrofahrzeugen Ladezeiten von mehreren Stunden je 100 km Reichweite ergeben.

Aufgrund der langen Ladezeiten für AC-Laden wurde DC-Laden mit Gleichspannung entwickelt. Im Gegensatz zum AC-Laden verfügt das Fahrzeug hierbei nicht über ein eigenes Ladegerät zur Einstellung und Einhaltung von Ladeparametern, d. h. insbesondere Ladestrom und -Spannung. Stattdessen führt die fahrzeugexterne Ladestation den Ladevorgang durch und formt ebenfalls Spannung und Strom so, wie es für das Laden der Antriebsbatterie des verbundenen Fahrzeugs erforderlich bzw. gewünscht ist. Die entsprechende Ladestation ist dann für die Einhaltung von Ladeparametem verantwortlich.

Ein Ladekabel umfasst beim DC-Laden meist zwei DC-Ladeleitungen, die während des Ladevorganges typischerweise direkt mit den Polen der Antriebsbatterie des Fahrzeuges verbunden werden. Eine galvanische Trennung zwischen den DC-Ladeleitungen und der Antriebsbatterie erfolgt nicht. Die Leistungen von solchen DC-Ladestationen liegen bei derzeit bis zu 50 kW. Dies ist ein Vielfaches von rechnerisch möglichen 12,8 kVA, wie sie im AC-Lademodus beim Laden mit 400V Drehstrom bei 32A theoretisch erreicht werden können. Das DC-Laden ermöglicht somit gegenüber dem AC-Laden bereits ein deutlich beschleunigtes Laden der Antriebsbatterie.

Aktuell verfügbare Fahrzeuge haben eine Antriebsbatterie mit einer Gesamtkapazität von oft 30-60 kWh, teilweise bis zu 100 kWh und mehr. Damit ergeben sich selbst bei der derzeitigen DC-Ladetechnologie rechnerische Ladezeiten für eine vollständige Ladung der Antriebsbatterie von mindestens ein bis zwei Stunden. Aufgrund realer Beschränkungen beim Laden der Antriebsbatterie können die Ladezeiten in der Praxis noch länger sein. Beispielsweise werden aktuelle Batterien vor dem Erreichen einer vollständigen Ladung oft nicht mehr mit maximalem Ladestrom geladen, um die Lebensdauer der Batterie zu erhöhen und Beschädigungen zu vermeiden.

Derzeit werden verbesserte DC-Schnelladestationen entwickelt, die beispielsweise eine maximale Leistung von bis zu 300 kW aufweisen, um Ladegeschwindigkeiten von mehr als 20 km/min zu erreichen oder sogar zu überbieten. Diese Leistung kann erreicht werden, indem beispielsweise Ladespannungen von bis zu 1000 V verwendet werden, um erforderliche Ladeströme sinnvoll zu begrenzen, in diesem Fall beispielsweise auf 300 A. Damit soll das Nachladen der Antriebsbatterie beispielsweise während Reisen in Größenordnungen gebracht werden, die Kunden vom Tanken ihrer bisherigen Fahrzeuge mit Verbrennungsmotoren gewohnt sind. Beispielhafte Details zum DC-Laden und den entsprechenden Vorgängen im Ladesystem und dem Fahrzeug sind unter anderem in DIN EN 61851 beschrieben.

Entsprechende Schnelladestationen erfordern also große Ladeströme, wodurch entsprechend große Kupferquerschnitte der DC-Ladeleitungen im Ladekabel notwendig sind, um Leitungsverluste klein zu halten. Ferner sind aufgrund von Witterung, Lichteinflüssen und der verwendeten DC-Hochspannung ein entsprechend dicker und widerstandsfähiger Kabelmantel sowie eine ausreichend dicke Isolierung im Inneren der Ladekabel erforderlich. In Summe überschreiten die Durchmesser typischer Ladekabel bereits heute oft 30 mm, wobei für die Zukunft noch größere Kabelquerschnitte zu erwarten sind. Dies erschwert die Handhabung der Ladekabel deutlich, schon aufgrund eines Gewichts der Leiter, die typischerweise aus Kupfer oder Aluminium gefertigt sind, und der Isolierung bzw. des Kabelmantels. Auch weisen die verwendeten Materialien des Leiters und der Isolierung, die meist aus Kunststoffen gefertigt sind, beispielsweise Polyurethan, eine hohe Steifigkeit auf. Die hohe Steifigkeit verstärkt die Wirkung des hohen Kabelgewichtes, indem das Ladekabel und damit der Ladestecker sehr schlecht beweglich und insbesondere sehr schlecht drehbar sind. Außerdem wird das Kabelgewicht oft nicht senkrecht zu Boden gezogen, sondern kann durch die hohe Steifigkeit des Ladekabels eine große Hebelwirkung entfalten. Somit kann es schwierig sein, das Ladekabel mit dem Ladestecker von der Schnellladestation bis zu dem zu ladenden Fahrzeug zu bewegen, den Ladestecker mit einer Ladebuchse des Fahrzeugs fein auszurichten und abschließend den Ladestecker mit der Ladebuchse zu verbinden. Dabei kann es zu einer schnellen Ermüdung oder Erschöpfung kommen, was die Akzeptanz gegenüber Elektrofahrzeugen beeinträchtigen kann.

Zwar sind auch hochflexible Ladekabel mit fein filamentierten Kupferleitern und weichen Isolations- und Mantelmaterialien bekannt, beispielsweise aus Weich-PVC (PVC-P) oder vorzugsweise aus Silikon-basierten Materialien. Diese Materialien sind aber teuer und in der Regel sehr anfällig für mechanische Beschädigungen und Umwelteinflüsse.

In diesem Zusammenhang ist aus der US 2015/0115889 A1 eine elektrische Anschlussanordnung für ein Ladesystem, insbesondere zum Aufladen einer Fahrzeugbatterie eines Kraftfahrzeuges bekannt. Die Anschlussanordnung umfasst ein erstes Anschlusselement, das mit einer Ladestation verbindbar ist und das in elektrischen Ladekontakt mit einem zweiten Anschlusselement treten kann, das an einer mobilen Plattform gelagert ist. Dabei ist in das erste Anschlusselement und/oder in das zweite Anschlusselement wenigstens ein Heizelement integriert.

Außerdem ist aus der DE 10 2011 119 495 A1 ein Ladekabel zum Laden einer kraftfahrzeugseitigen Energiespeichereinheit für elektrische Energie bekannt. Das Ladekabel umfasst zumindest ein Anschlusselement zur Verbindung mit einem kraftfahrzeugseitigen Anschluss der Energiespeichereinheit oder einem Anschluss an eine externe Energiequelle, welche zur Bereitstellung von elektrischer Energie ausgebildet ist, wobei eine elektrische Heizvorrichtung zum Beheizen des Anschlusselements und zumindest eines Abschnitts des Ladekabels vorgesehen ist.

Weiter sind aus der US 2011/0199047 A1 ein Ladegerät und ein Ladesystem bekannt. Das Ladegerät enthält ein Ladekabel und einen Ladestecker. Eine Heizung ist so konfiguriert, dass sie den Ladestecker mit durch das Ladekabel bereitgestelltem elektrischem Strom erhitzt. Eine Zustandsbestimmungseinrichtung ist ausgebildet, einen Ladezustand einer im Fahrzeug montierten Batterie zu ermitteln und um zu bestimmen, ob eine Erwärmungsbedingung zum Heizen des Ladesteckers erfüllt ist. Ein Heizungsregler ist konfiguriert, um eine Erwärmung durch die Heizung basierend auf einer Bestimmung der Zustandsbestimmungseinrichtung zu steuern. Die Heizung ist in der Lage, in einen post-Ladungserwärmungszustand geschaltet zu werden, in dem die Heizvorrichtung den Ladestecker nach Beendigung des Ladens der im Fahrzeug montierten Batterie erwärmt. Der Heizungsregler schaltet die Heizung in den post-Ladungserwärmungszustand und steuert die durch die Heizung durchgeführte Erwärmung, wenn die Zustandsbestimmungseinrichtung feststellt, dass der Ladevorgang der in dem Fahrzeug montierten Batterie beendet ist, und weiter feststellt, dass eine Erwärmungsbedingung erfüllt ist.

Auch ist aus der US 9 321 364 B1 ein elektrischer Bus bekannt, der eine Ladeschnittstelle aufweisen kann, die an einer äußeren Oberfläche des elektrischen Busses positioniert ist. Eine oder mehrere Heizkissen können entfernbar an der Ladeschnittstelle angebracht sein und konfiguriert sein, um die Ladeschnittstelle zu erwärmen. Die Heizkissen können eine starre Platte umfassen, die eine freiliegende Oberfläche der Ladeschnittstelle bildet. Die Platte kann so positioniert sein, dass eine erste Seite der Platte eine Ladungskopf-Kontaktfläche bildet, wenn der Ladungskopf mit der Ladeschnittstelle in Eingriff kommt. Eine Heizvorrichtung kann an einer zweiten Seite der Platte gegenüber der ersten Seite angebracht sein. Die Heizvorrichtung kann ein Heizelement umfassen, das konfiguriert ist, um die Platte durch Widerstandsheizung zu erwärmen.

US 2017/0096073 A1 betrifft eine Ladestation zum Schnellladen von Fahrzeugen mit elektrischen Antrieben, und zwar solche Details, die der Temperierung des elektrischen Fahrzeugs; nämlich der Batterie des elektrischen Fahrzeugs, beim Laden dienen.

Ausgehend von dem oben genannten Stand der Technik liegt der Erfindung somit die Aufgabe zugrunde, eine Ladekabelvorrichtung für eine Schnellladestation zum Schnellladen einer Batterie eines Fahrzeugs mit einem elektrischen Antrieb, eine Schnellladestation mit einer solchen Ladekabelvorrichtung und Verfahren zum Betreiben einer Schnellladestation anzugeben, die eine einfache Handhabung des Ladekabels zum Laden des Fahrzeugs ermöglichen.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Grundidee der vorliegenden Erfindung ist es also, die Handhabung des Ladekabels dadurch zu verbessern, dass das Ladekabel vor der Verwendung erwärmt wird. Durch das Erwärmen wird die Steifigkeit von einem Leitermaterial, welches üblicherweise Kupfer oder Aluminium ist, von einer Isolationsschicht der Leiter des Ladekabels und/oder von dem Ladekabelmantel reduziert. Dadurch kann eine Flexibilität des Ladekabels insgesamt verbessert werden, um dessen Handhabung zu Beginn des Ladevorganges, d. h. vor oder während einer Entnahme des Ladekabels aus einer Halterung der Ladestation zu verbessern um einen angenehmen Steckvorgang für den Nutzer zu ermöglichen. Dabei wird die Eigenschaft insbesondere von für Ladekabelmantel typischen Kunststoffen, beispielsweise Polypropylen, Polyvinylchlorid, Polyurethan, Polyamid oder Tetrafluorethylen/Teflon, aber auch von Kupferkabeln genutzt, mit steigender Temperatur flexibler zu werden und eine geringere Steifigkeit aufweisen. Allerdings wird auch die Steifigkeit von typischen Materialien für Ladeleitungen des Ladekabels reduziert. Dies wird durch ein bereitstellen eines Fluidkreislaufs erreicht, in dem das Fluid als Wärmetransportmittel einen Wärmetransport von der Temperiervorrichtung in das Ladekabel bewirkt. Das Fluid wird entsprechend in der Temperiervorrichtung erwärmt und überträgt die Wärme auf das Ladekabel.

Die Erwärmung des Ladekabels verbessert insbesondere bei geringen Außentemperaturen, denen Ladekabel oftmals ausgesetzt sind, dessen Handhabung deutlich. Dies gilt umso mehr, wenn die Schnellladestationen an Standorten mit geringen Umgebungstemperaturen, die beispielsweise unterhalb eines weltweiten oder regionalen Mittelwerts liegen, aufgestellt sind.

Ein Erwärmen des Ladekabels kann mit der angegebenen Ladekabelvorrichtung und der entsprechenden Schnellladestation durchgeführt werden, um das Ladekabel vor einer Verwendung zu erwärmen, und so dessen Steifigkeit zu reduzieren. Dies umfasst sowohl das Verbinden des Ladekabels mit dem Fahrzeug wie auch das Trennen des Ladekabels von dem Fahrzeug. Während des Ladevorgangs wird das Ladekabel vorzugsweise nicht erwärmt, um einen elektrischen Widerstand der Ladeleitungen nicht zu erhöhen. Darüber erwärmt sich das Ladekabel beim Schnellladen aufgrund der großen Ladeströme und damit einhergehenden Leitungsverluste selber, so dass eine weitere Erwärmung nicht erforderlich ist.

Das Leitermaterial der Ladeleitungen ist üblicherweise ein elektrisch gut leitendendes Metall, beispielsweise Kupfer oder Aluminium. Als Metalle weisen diese Leitermaterialien auch eine gute Wärmeleitfähigkeit auf, so dass Wärme in den Ladeleitungen entlang des Ladekabels gut verteilt wird.

Die Schnellladestation kann prinzipiell mit einem AC-Lademodus ausgeführt sein, in dem eine Versorgungsspannung von 230 V bzw. 400 V und ein Versorgungsstrom von maximal 16 A bzw. 32 A verwendet werden können. Vorzugsweise ist die Schnellladestation mit einem DC-Lademodus zum DC-Laden mit Gleichspannung ausgeführt. Die Schnellladestation hat vorzugsweise eine Leistung von bis zu 50 kW, besonders bevorzugt von bis zu 300 kW. Dazu können eine Ladespannung von beispielsweise 1000 V und ein Ladestrom von beispielsweise 300 A eingestellt werden. Details zum DC-Laden und zu entsprechenden Vorgängen in der Schnellladestation und dem Fahrzeug sind beispielsweise in DIN EN 61851 beschrieben.

Das Ladekabel umfasst wenigstens zwei Ladeleitungen und einen Ladekabelmantel sowie eine ausreichend dicke Isolierung der wenigstens zwei Ladeleitungen im Inneren des Ladekabels. Die Ladeleitungen sind beispielsweise aus Kupfer oder Aluminium hergestellt, und die Isolierung der Ladeleitungen beispielsweise aus Polyurethan. Der Ladekabelmantel ist aus Kunststoff, beispielsweise Polypropylen, Polyvinylchlorid, Polyurethan, Polyamid oder Tetrafluorethylen/Teflon, hergestellt.

Das Fahrzeug mit einem elektrischen Antrieb kann ein ausschließlich elektrisch betriebenes Fahrzeug sein, oder ein sogenanntes Hybridfahrzeug, welches neben dem elektrischen Antrieb zusätzlich einen weiteren, konventionellen Antrieb aufweist, typischerweise einen Verbrennungsmotor. Das Fahrzeug umfasst eine Antriebsbatterie, die der Einfachheit halber im Weiteren lediglich als Batterie bezeichnet wird. Die Batterie umfasst typischerweise eine Vielzahl Batteriezellen, die in Reihe und parallel miteinander verschaltet sind, um für den elektrischen Antrieb eine geeignete Kombination aus Strom und Spannung bereitzustellen.

Die Temperiervorrichtung weist eine Kühlvorrichtung auf, um das Fluid in dem Fluidkreislauf zu kühlen. Durch die Kühlvorrichtung kann das Ladekabel beim Laden der Batterie des Fahrzeugs gekühlt werden. Somit kann beim Laden anfallende Wärme aufgrund von elektrischen Leitungsverlusten abgeführt werden. Dadurch wird der Widerstand der Ladeleitungen reduziert. Außerdem werden mögliche Gefahren durch eine übermäßige Erwärmung des Ladekabels verhindert, beispielsweise beim Berühren. Auch kann ein Kabelquerschnitt des Ladekabels klein gehalten werden, da die Wärmeverluste dünnerer elektrischer Ladeleitungen durch Kühlung kompensiert werden können. Dies begünstigt eine hohe Flexibilität des Ladekabels und ermöglicht die Bereitstellung eines Ladekabels mit einem geringen Gewicht. Die Steifheit des Ladekabels nimmt üblicherweise mit dessen Querschnitt zu.

In vorteilhafter Ausgestaltung der Erfindung weist die Temperiervorrichtung eine Heizvorrichtung auf, um das Fluid in dem Fluidkreislauf zu erwärmen. Die Heizvorrichtung kann eine prinzipiell beliebige Heizvorrichtung sein. Die Heizvorrichtung ist vorzugsweise eine elektrische Heizvorrichtung. Die Heizvorrichtung umfasst vorzugsweise eine Steuerungseinrichtung oder eine Regeleinrichtung, um eine Erwärmung des Fluides nach Bedarf durchführen zu können. Die Erwärmung des Fluides kann somit beispielsweise bei unterschiedlichen Umgebungstemperaturen so durchgeführt werden, dass das Ladekabel immer auf eine gleiche Temperatur zur Verwendung erwärmt wird. Die Heizvorrichtung ist vorzugsweise in einem Zulauf zu dem Ladekabel angeordnet.

In vorteilhafter Ausgestaltung der Erfindung weist die Temperiervorrichtung eine Wärmetauschervorrichtung auf, um das Fluid in dem Fluidkreislauf zu erwärmen. Das Funktionsprinzip einer Wärmetauschervorrichtung bzw. eines Wärmetauschers beruht darauf, dass ein Wärmeübertragungsfluid von einer Primärseite in die Wärmetauschervorrichtung einfließt und eine Wärmeübertragung auf mit dem Fluid des Fluidkreislauf erfolgt. Der Fluidkreislauf ist auf einer Sekundärseite der Wärmetauschervorrichtung angeordnet. Eine Steuerungseinrichtung oder eine Regeleinrichtung kann vorgesehen sein, um eine Erwärmung des Fluides nach Bedarf durchführen zu können. Dazu wird insbesondere ein Durchfluss des Wärmeübertragungsfluids auf der Primärseite verändert. Die Erwärmung des Fluides kann somit beispielsweise bei unterschiedlichen Umgebungstemperaturen so durchgeführt werden, dass das Ladekabel immer auf eine gleiche Temperatur zur Verwendung erwärmt wird. Die Heizvorrichtung ist vorzugsweise in einem Zulauf zu dem Ladekabel angeordnet.

In vorteilhafter Ausgestaltung der Erfindung weist die Temperiervorrichtung eine Wärmepumpenvorrichtung auf, um das Fluid in dem Fluidkreislauf zu erwärmen. Bei der Wärmepumpe wird thermische Energie aus einem Reservoir mit niedrigerer Temperatur aufgenommen und als Nutzwärme auf ein zu beheizendes System mit höherer Temperatur übertragen. Wärmepumpen können sowohl zum Kühlen wie auch zum Heizen verwendet werden. Entsprechend kann dem Fluid Umgebungswärme zugeführt werden, oder dem Fluid wird Wärme entzogen, die als Umgebungswärme abgegeben wird. Wärmepumpen werden in der Regel mit Medien betrieben, die bei niedrigem Druck unter Wärmezufuhr verdampfen und nach der Verdichtung auf einen höheren Druck unter Wärmeabgabe wieder kondensieren, um die Energie eines Phasenübergangs zu nutzen. Der Druck wird so gewählt, dass die Temperaturen des Phasenübergangs einen für die Wärmeübertragung ausreichenden Abstand zu den Temperaturen von Wärmequelle und Wärmesenke haben. Eine Steuerungseinrichtung oder eine Regeleinrichtung kann vorgesehen sein, um eine Erwärmung des Fluides nach Bedarf durchführen zu können. Die Erwärmung des Fluides kann somit beispielsweise bei unterschiedlichen Umgebungstemperaturen so durchgeführt werden, dass das Ladekabel immer auf eine gleiche Temperatur zur Verwendung erwärmt wird. Die Heizvorrichtung ist vorzugsweise in einem Zulauf zu dem Ladekabel angeordnet.

In vorteilhafter Ausgestaltung der Erfindung ist die Ladekabelvorrichtung als geschlossene und mit Fluid vorgefüllte Baugruppe zur Montage in der Schnellladestation ausgeführt. Dies ermöglicht beispielsweise eine einfache Nachrüstung bestehender Schnellladstationen mit einer Ladekabelvorrichtung zum Temperieren des Ladekabels. Im Falle einer Beschädigung oder eines Defekts kann die Ladekabelvorrichtung vollständig ausgetauscht werden, so dass die Schnellladestation schnell wieder funktionsbereit ist. Die Ladekabelvorrichtung kann dann unabhängig von der Schnellladestation repariert werden. Entsprechendes gilt beispielsweise für Wartungs- oder Prüfarbeiten an der Ladekabelvorrichtung. Insbesondere ein aufwändiges Befüllen der Ladekabelvorrichtung mit dem Fluid wie auch ein damit einhergehendes Entlüften der Ladekabelvorrichtung kann entfallen. Bei der Verwendung von einem potenziell gesundheitsschädlichen oder gefährlichen Fluid können Belastungen oder Gefahren im Bereich der Schnellladestation vermieden werden, da das Fluid an besonders geeigneten Orten für die Verwendung von potenziell gesundheitsschädlichen oder gefährlichen Stoffen in die Ladekabelvorrichtung gefüllt werden kann.

In vorteilhafter Ausgestaltung der Erfindung weist die Ladekabelvorrichtung eine Pumpe zur Zirkulation des Fluides in dem Fluidkreislauf und/oder einen Ausgleichsbehälter für das Fluid auf. Durch die Pumpe kann das Fluid aktiv durch den Fluidkreislauf zirkuliert werden. Mit dem Ausgleichsbehälter können Volumenschwankungen des Fluides basierend auf einer Änderung der Temperatur ausgeglichen werden. Außerdem kann ein Verlust von Fluid ausgeglichen werden, und Lufteinschlüsse in dem Fluid können reduziert werden.

In vorteilhafter Ausgestaltung der Erfindung sind die Fluidleitungen in dem Ladekabel individuell ausgeführt und separat angeordnet oder gemeinsam ausgeführt und koaxial zueinander ausgeführt oder jeweils integral mit einem Ladeleiter, insbesondere jeweils koaxial innerhalb eines Ladeleiters, ausgeführt und angeordnet. Die Anordnung der Fluidleitungen innerhalb des Ladekabels ist prinzipiell beliebig. Auch kann das Ladekabel mehr als zwei Fluidleitungen aufweisen, um so eine gewünschte Wärmeverteilung innerhalb des Ladekabels zu erreichen. Auch kann das Ladekabel beispielsweise eine beliebige Anzahl Fluidleitungen zum Durchfluss in einer Richtung und eine davon unabhängige Anzahl Fluidleitungen zum Durchfluss in Gegenrichtung aufweisen.

In vorteilhafter Ausgestaltung der Erfindung weist die Schnellladestation ein Ladesäulengehäuse auf, das Ladesäulengehäuse ist mit einer Montagehalterung zur Aufnahme der Temperiervorrichtung ausgeführt, das Ladesäulengehäuse weist eine oberseitige Zugangsöffnung auf, und die Temperiervorrichtung ist durch die oberseitige Zugangsöffnung in die Montagehalterung absenkbar.

In vorteilhafter Ausgestaltung der Erfindung weist die Schnellladestation Schnellverbindungseinrichtungen zum Verbinden mit der Ladekabelvorrichtung auf. Dies umfasst sämtliche Verschlüsse und Kupplungen, d. h. elektrische Verbindungen und Fluidverbindungen sind zur Schnellmontage ausgeführt. Dadurch kann die Ladekabelvorrichtung einfach montiert werden. Dabei kann eine Fixierung des Ladekabels lediglich erfolgen, indem der Ladekabelmantel klemmend an einem Austritt aus einem Gehäuse der Ladesäule fixiert wird. Gegebenenfalls kann das Ladekabel zusätzlich in einem Tragarm des Gehäuses der Ladesäule fixiert werden.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
Fig. 1: eine Schnellladestation zum Schnellladen einer Batterie eines Fahrzeugs mit einem elektrischen Antrieb gemäß einer ersten, bevorzugten Ausführungsform in einer perspektivischen Ansicht,
Fig. 2: die Schnellladestation aus Fig. 1 in einem geöffneten Zustand mit einer darin angeordneten Ladekabelvorrichtung gemäß der ersten Ausführungsform in einer perspektivischen Ansicht,
Fig. 3: die Ladekabelvorrichtung der Schnellladestation aus Fig. 2 gemäß der ersten Ausführungsform, in einer perspektivischen Ansicht,
Fig. 4: eine Temperiervorrichtung der Ladekabelvorrichtung aus Fig. 3 gemäß der ersten Ausführungsform in einer perspektivischen Ansicht,
Fig. 5: eine schematische Darstellung der Temperiervorrichtung der Ladekabelvorrichtung aus Fig. 4 gemäß der ersten Ausführungsform,
Fig. 6: eine schematische Darstellung eines Ladekabels der Ladekabelvorrichtung aus Fig. 3 gemäß einer zweiten Ausführungsform, wobei in dem Mantel des Ladekabels zwei Fluidkanäle angeordnet sind, in einer Schnittansicht,
Fig. 7: eine schematische Darstellung eines Ladekabels der Ladekabelvorrichtung aus Fig. 3 gemäß einer dritten Ausführungsform, wobei in dem Mantel des Ladekabels zwei Fluidkanäle konzentrisch angeordnet sind, in einer Schnittansicht,
Fig. 8: eine schematische Darstellung eines Ladekabels der Ladekabelvorrichtung aus Fig. 3 gemäß einer vierten Ausführungsform, wobei in zwei Ladeleitungen des Ladekabels zwei Fluidkanäle angeordnet sind, in einer Schnittansicht,
Fig. 9: ein beispielhaftes Diagramm eines Verlaufs einer Shore-Härte über die Temperatur,
Fig. 10: eine schematische Darstellung einer Temperiervorrichtung gemäß einer fünften Ausführungsform in einer Prinzipansicht,
Fig. 11: eine schematische Darstellung einer Temperiervorrichtung gemäß einer sechsten Ausführungsform in einer Prinzipansicht, und
Fig. 12: eine schematische Darstellung einer Temperiervorrichtung gemäß einer siebten Ausführungsform in einer Prinzipansicht.

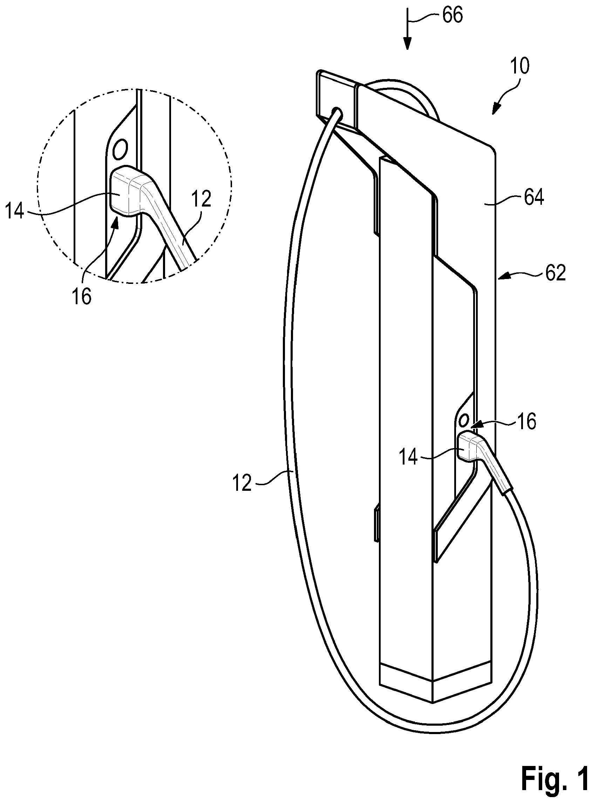

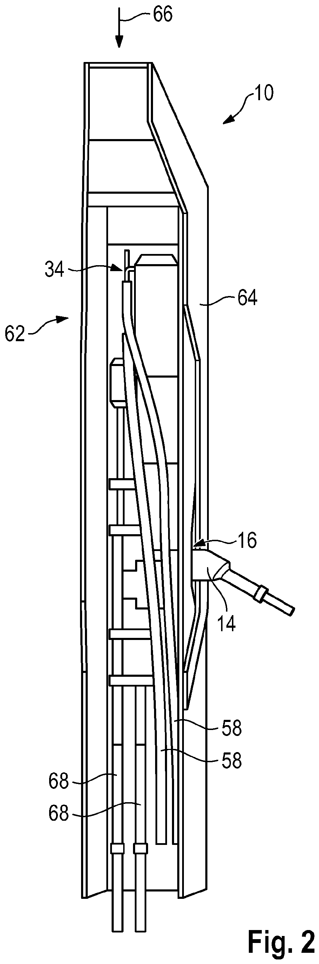

Die Figuren 1 und 2 zeigen eine erfindungsgemäße Schnellladestation 10 gemäß einer ersten, bevorzugten Ausführungsform.

Die Schnellladestation 10 ist mit einem DC-Lademodus zum DC-Laden einer Antriebsbatterie eines Fahrzeugs mit Gleichspannung ausgeführt. Die Schnellladestation 10 hat vorzugsweise eine Leistung von bis zu 50 kW. In einer alternativen Ausführungsform hat die Schnellladestation 10 eine Leistung von bis zu 300 kW. Um dies zu ermöglichen ist die Schnellladestation 10 für eine Ladespannung von bis zu 1000 V und einen Ladestrom von bis zu 300 A ausgeführt. Details zum DC-Laden und zu entsprechenden Vorgängen in der Schnellladestation 10 und dem Fahrzeug sind beispielsweise in DIN EN 61851 beschrieben.

Die Schnellladestation 10 umfasst eine Ladekabelvorrichtung 50 zum Schnellladen der Antriebsbatterie, im Weiteren auch nur als Batterie bezeichnet, des hier nicht dargestellten Fahrzeugs. Das Fahrzeug ist entsprechend mit einem elektrischen Antrieb ausgeführt.

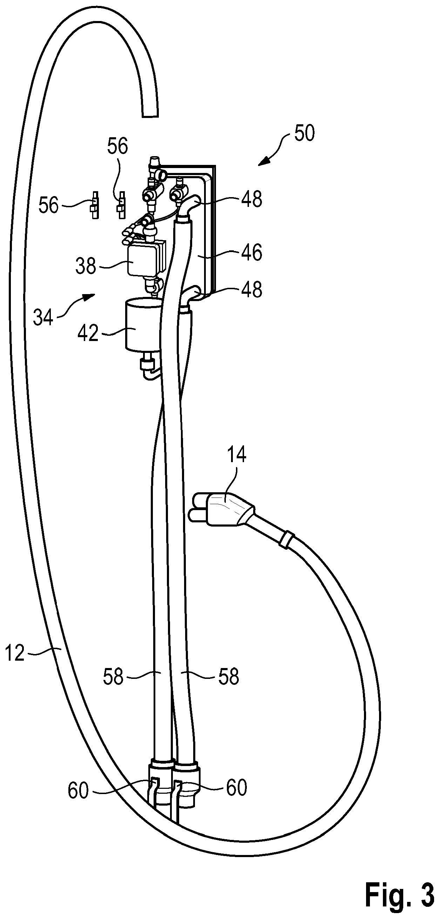

Die Ladekabelvorrichtung 50 der ersten Ausführungsform ist in Figur 3 einzeln dargestellt. Die Ladekabelvorrichtung 50 umfasst eine Temperiervorrichtung 34 und ein damit verbundenes Ladekabel 12. Das Ladekabel 12 ist an seinem der Temperiervorrichtung 34 entfernten Ende mit einem Ladestecker 14 nach dem Kabelstandard Combined Charging System (CCS) Combo Typ 2 ausgeführt. Der Ladestecker 14 ist bei Nichtbenutzung in einem Halter 16 der Schnellladestation 10 gehalten.

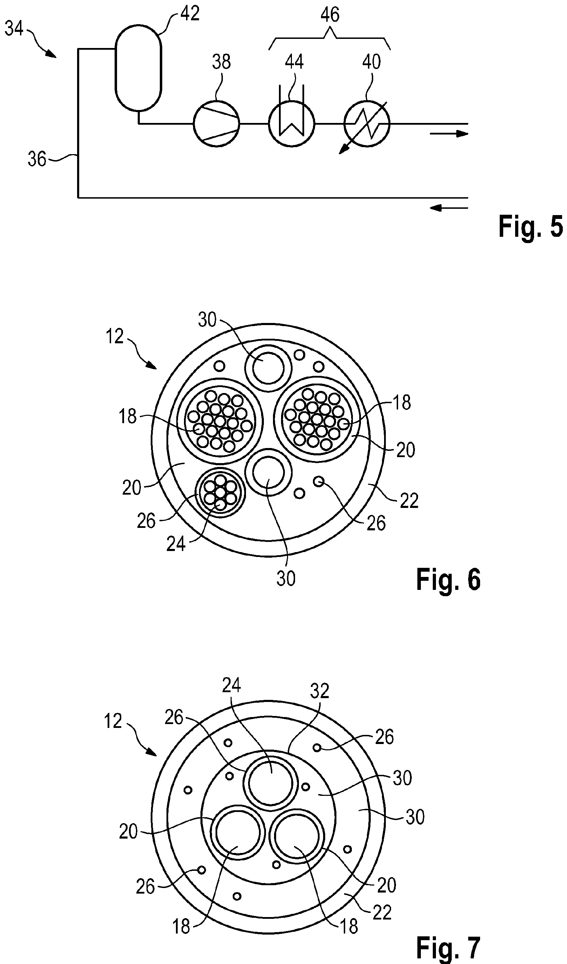

Nachfolgend werden verschiedene Ladekabel 12 unter Bezug auf die Figuren 6 bis 8 beschrieben, die beispielhaft in der Ladekabelvorrichtung 50 verwendet werden können.

Ein Ladekabel 12 gemäß einer zweiten Ausführungsform ist im Detail in Figur 6 dargestellt. Das Ladekabel 12 der zweiten Ausführungsform umfasst zwei DC-Ladeleitungen 18 als Ladeleiter mit entsprechenden Isolierungen 20, die in einem Ladekabelmantel 22 angeordnet sind. Die DC-Ladeleitungen 18 sind hier als DC-Ladeleitungen zum Laden mit Gleichstrom ausgeführt und aus Kupfer hergestellt. Die Isolierungen 20 der DC-Ladeleitungen 18 sind aus Polyurethan gefertigt, und der Ladekabelmantel 22 ist aus Polypropylen hergestellt.

Weiterhin ist in dem Ladekabelmantel 22 ein Masseleiter 24 angeordnet, der von einer entsprechenden Masseisolierung 26 umgeben ist.

In dem Ladekabelmantel 22 sind außerdem eine Mehrzahl Signalleiter 28 angeordnet, über die das Fahrzeug mit der Schnellladestation 10 kommunizieren kann.

Außerdem sind in dem Ladekabelmantel 22 zwei Fluidleitungen 30 ausgebildet, in denen ein Fluid zirkulieren kann. Die beiden Fluidleitungen 30 sind an einem der Temperiervorrichtung 34 zugewandten Ende mit dieser verbunden. An einem dem Ladestecker 14 zugewandten Ende des Ladekabels 12 sind die beiden Fluidleitungen 30 miteinander verbunden, um eine Zirkulation des Fluides von der Temperiervorrichtung 34 durch eine der Fluidleitungen 30 in Richtung zu dem Ladestecker 14 und durch die andere Fluidleitung 30 von dem Ladestecker 14 zurück zu der Temperiervorrichtung 34 zu ermöglichen.

Durch die Anordnung der beiden Fluidleitungen 30 an zwei Seiten der zwei DC-Ladeleitungen 18 können die zwei DC-Ladeleitungen 18 durch die beiden Fluidleitungen 30 effizient temperiert werden. Das Fluid kann in den beiden Fluidleitungen 30 zum Temperieren des Ladekabels 12 und insbesondere der zwei DC-Ladeleitungen 18 beitragen. Insbesondere kann durch diese Anordnung der Ladekabelmantel 22 durch die zwei Fluidleitungen 30 jeweils von zwei Seiten temperiert werden. Es ergibt sich eine große Schnittfläche mit den zwei DC-Ladeleitungen 18.

Ein Ladekabel 12 gemäß einer dritten Ausführungsform ist im Detail in Figur 7 dargestellt. Das Ladekabel 12 der dritten Ausführungsform entspricht teilweise dem Ladekabel 12 der zweiten Ausführungsform, so dass im Folgenden im Wesentlichen Unterschiede zu dem Ladekabel 12 der zweiten Ausführungsform beschrieben werden.

Das Ladekabel 12 der dritten Ausführungsform umfasst zwei DC-Ladeleitungen 18 mit entsprechenden Isolierungen 20, die in einem Ladekabelmantel 22 angeordnet sind. Die DC-Ladeleitungen 18 sind dort zusammen mit einem Masseleiter 24, der von einer entsprechenden Masseisolierung 26 umgeben ist, angeordnet.

Über den Querschnitt des Ladekabelmantels 22 verteilt umfasst das Ladekabel 12 eine Mehrzahl Signalleiter 28, über die das Fahrzeug mit der Schnellladestation 10 kommunizieren kann.

Außerdem sind in dem Ladekabelmantel 22 zwei Fluidleitungen 30 ausgebildet, in denen ein Fluid zirkulieren kann. Die beiden Fluidleitungen 30 sind konzentrisch innerhalb des Ladekabelmantels 22 angeordnet und durch eine Trennwand 32 voneinander getrennt. Sowohl die zwei DC-Ladeleitungen 18 wie auch der Masseleiter 24 sind dabei in einem zentralen Bereich des Ladekabels 12 innerhalb derselben Fluidleitung 30 positioniert.

Auch gemäß der dritten Ausführungsformsind die beiden Fluidleitungen 30 an einem der Temperiervorrichtung 34 zugewandten Ende mit dieser verbunden, und an einem dem Ladestecker 14 zugewandten Ende des Ladekabels 12 sind die beiden Fluidleitungen 30 miteinander verbunden.

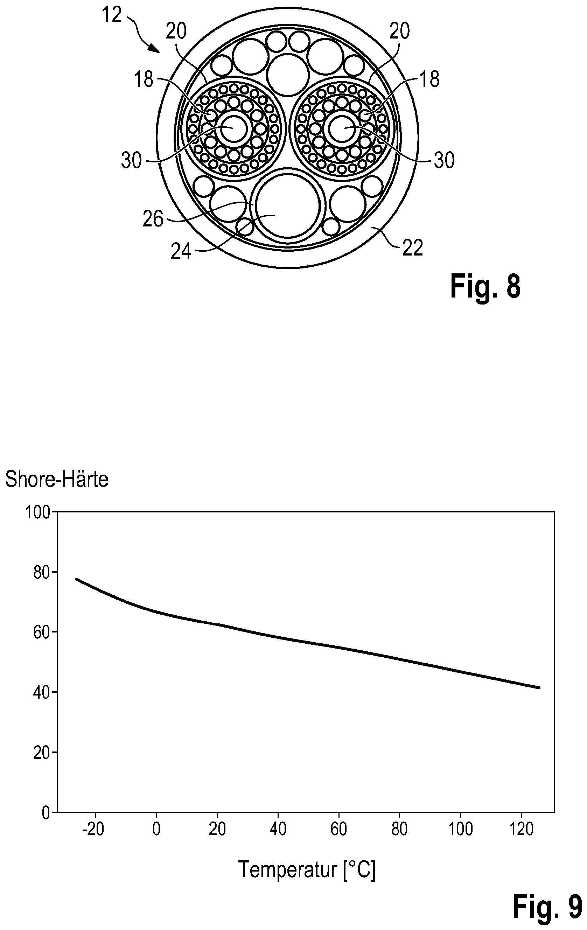

Ein Ladekabel 12 gemäß einer vierten Ausführungsform ist im Detail in Figur 8 dargestellt. Das Ladekabel 12 der vierten Ausführungsform entspricht teilweise dem Ladekabel 12 der zweiten Ausführungsform, so dass nachfolgend hauptsächlich Unterschiede zu dem Ladekabel 12 der zweiten Ausführungsform beschrieben werden.

Das Ladekabel 12 der vierten Ausführungsform umfasst zwei DC-Ladeleitungen 18 mit entsprechenden Isolierungen 20, die in einem Ladekabelmantel 22 angeordnet sind. Die DC-Ladeleitungen 18 sind dort zusammen mit einem Masseleiter 24, der von einer entsprechenden Masseisolierung 26 umgeben ist, angeordnet.

Auch das in Figur 8 dargestellte Ladekabel 12 umfasst eine Mehrzahl Signalleiter 28, über die das Fahrzeug mit der Schnellladestation 10 kommunizieren kann. Diese sind allerdings in Figur 8 nicht dargestellt, können aber wie in Bezug auf die Ladekabel 12 der zweiten und dritten Ausführungsform beschrieben angeordnet sein.

Außerdem sind innerhalb des Ladekabelmantels 22 zwei Fluidleitungen 30 ausgebildet, in denen ein Fluid zirkulieren kann. Die beiden Fluidleitungen 30 sind jeweils konzentrisch innerhalb der beiden DC-Ladeleitungen 18 ausgebildet. Auch gemäß der vierten Ausführungsform sind die beiden Fluidleitungen 30 an einem der Temperiervorrichtung 34 zugewandten Ende mit dieser verbunden, und an einem dem Ladestecker 14 zugewandten Ende des Ladekabels 12 sind die beiden Fluidleitungen 30 miteinander verbunden.

In einer alternativen Ausführungsform bilden die Isolierungen 20 der beiden DC-Ladeleitungen 18 eine Begrenzung der beiden Fluidleitungen 30. Die DC-Ladeleitungen 18 und die Fluidleitungen 30 sind also gemeinsam innerhalb der Isolierung 20 angeordnet, und das Fluid kann die DC-Ladeleitungen 18 umströmen.

In einer weiter alternativen Ausführungsform weist das Ladekabel eine weitere, dritte Fluidleitung 30 auf, und die beiden Fluidleitungen 30, die in den beiden DC-Ladeleitungen 18 ausgebildet sind, bilden gemeinsam einen Durchfluss für das Fluides in Richtung von der Temperiervorrichtung 34. Die weitere, dritte Fluidleitung 30 bildet entsprechend einen Rückfluss für das Fluid. Dadurch werden die beiden DC-Ladeleitungen 18 von gleichermaßen temperiertem Fluid durchflossen, um die DC-Ladeleitungen 18 gleichermaßen zu temperieren.

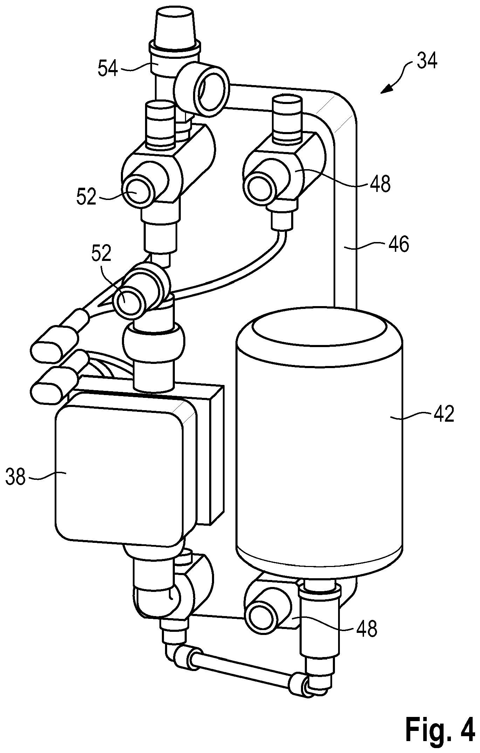

Die Temperiervorrichtung 34 der ersten Ausführungsform ist in den Figuren 4 und 5 dargestellt.

Die Temperiervorrichtung 34 umfasst einen Leitungsabschnitt 36, der mit den Fluidleitungen 30 des Ladekabels 12 verbunden bzw. verbindbar ist, um einen geschlossenen Fluidkreislauf zu bilden.

Die Temperiervorrichtung 34 umfasst weiterhin eine Pumpe 38, die in dem Leitungsabschnitt 36 angeordnet ist, um das Fluid in dem Fluidkreislauf zu zirkulieren. Außerdem umfasst die Temperiervorrichtung 34 eine steuerbare Heizvorrichtung 40, um das Fluid zu erwärmen. Die Heizvorrichtung 40 ist eine elektrische Heizvorrichtung, der eine Regeleinrichtung beigeordnet ist, um eine Erwärmung des Fluides nach Bedarf durchzuführen. Die Heizvorrichtung 40 ist in einem Zulauf zu dem Ladekabel 12 angeordnet.

Weiterhin umfasst die Temperiervorrichtung 34 einen optionalen Ausgleichsbehälter 42, um beispielsweise Volumenschwankungen des Fluides basierend auf einer Änderung seiner Temperatur auszugleichen. Außerdem kann ein Verlust von Fluid ausgeglichen werden, und Lufteinschlüsse in dem Fluid können reduziert werden.

Die Temperiervorrichtung 34 umfasst zusätzlich einen Wärmetauscher 44, der ebenfalls in dem Leitungsabschnitt 36 angeordnet ist. Der Wärmetauscher 44 kann dem Fluid Wärme entziehen. Dadurch kann das Fluid nicht nur durch die Heizvorrichtung 40 erwärmt, sondern auch durch den Wärmetauscher 44 gekühlt werden. In einer alternativen Ausgestaltung ist der Wärmetauscher 44 zum alternativen oder zusätzlichen Erwärmen des Ladekabels 12 ausgeführt.

Der Wärmetauscher 44 ist gemeinsam mit der Heizvorrichtung 40 als Temperiereinheit 46 ausgeführt, welche beide Komponenten integral umfasst. Entsprechend weist die Temperiereinheit 46 zwei Primärkreisanschlüsse 48, durch welche dem Wärmetauscher 44 ein Kühlmedium zugeführt wird. Außerdem umfasst die Temperiereinheit 46 zwei Sekundärkreisanschlüsse 52, über welche die Temperiereinheit 46 mit dem Leitungsabschnitt 36 verbunden ist.

Weiterhin ist die Temperiereinheit 46 mit einem Entlüftungsventil 54 ausgeführt, um den Fluidkreislauf entlüften zu können. Das Entlüftungsventil 54 ist an einem der Sekundärkreisanschlüsse 52 ausgebildet.

Zu der Temperiervorrichtung 34 gehören außerdem zwei Kabelschuhe 56 zur Verbindung mit den DC-Ladeleitungen 18 des Ladekabels 12. Ebenfalls umfasst die Temperiervorrichtung 34 zwei Fluidanschlussleitungen 58 mit Schnellkupplungen 60 zur Verbindung mit einem Primärkreislauf.

Wie sich aus den vorstehenden Ausführungen ergibt, ist die Ladekabelvorrichtung 50 als geschlossene und mit Fluid vorgefüllte Baugruppe zur Montage in der Schnellladestation 10 ausgeführt. Dazu umfasst die Ladekabelvorrichtung 50 Schnellverbindungseinrichtungen 60. Dies umfasst elektrische Verbindungen und Fluidverbindungen, d.h. die Schnellkupplungen 60 und elektrische Anschlussleitungen 68. Eine Fixierung des Ladekabels 12 erfolgt dabei, indem der Ladekabelmantel 22 klemmend an einem Austritt aus einem Ladesäulengehäuse 62 der Schnellladestation 10 fixiert wird.

Wie in Figur 2 dargestellt ist, ist die Ladekabelvorrichtung 50 im montierten Zustand in dem Ladesäulengehäuse 62 gehalten. Dazu ist das Ladesäulengehäuse 62 mit einer Montagehalterung zur Aufnahme der Temperiervorrichtung 50 ausgeführt. Das Ladesäulengehäuse 62 weist eine oberseitige Zugangsöffnung 66 auf, durch welche die Temperiervorrichtung 34 in die Montagehalterung absenkbar ist.

Die beschriebene Schnellladestation 10 der ersten Ausführungsform ist ausgeführt, ein Verfahren zum Temperieren des Ladekabels 12 zum Schnellladen der Batterie des Fahrzeugs durchzuführen. Dabei wird das Ladekabel 12 auf eine Temperatur vorgewärmt, die sicherstellt, dass das Ladekabel 12 für eine nachfolgende Verbindung mit einem zu ladenden Fahrzeug rechtzeitig erwärmt werden kann, um die Steifigkeit auf ein gewünschtes Maß zu reduzieren. Dazu wird das Ladekabel 12 bei Nichtverwendung kontinuierlich mit einer geringen konstanten Leistung vorgewärmt.

Bevor das Ladekabel 12 mit dem Fahrzeug verbunden werden soll, erfolgt ein weiteres Erwärmen des Ladekabels 12. Das Ladekabel 12 wird also erwärmt, um dessen Härte zu reduzieren und das Ladekabel 12 leichter biegbar zu machen. Ein entsprechendes Diagramm der Shore-Härte über die Temperatur ist in Figur 7 für einen oft eingesetzten Kunststoff gezeigt. Beispielsweise kann bei einer Erwärmung des Ladekabels 12 auf etwa 40 °C gegenüber einer Temperatur von 0 °C bereits eine Reduktion der Shore-Härte von 10°Shore bis 15°Shore erreicht werden.

Sobald das Ladekabel 12 mit dem Fahrzeug verbunden ist, wird das Erwärmen des Ladekabels 12 beendet. Das Ladekabel 12 wird längstens erwärmt, bis das Ladekabel 12 über seinen Ladestecker 14 mit einer korrespondierenden Ladebuchse des Fahrzeugs, die nicht in den Figuren dargestellt ist, verbunden ist.

Nach dem Verbinden des Ladekabels 12 mit dem Fahrzeug wird das Ladekabel 12 vorzugsweise gekühlt, um während des Schnellladens anfallende Verlustwärme abzuführen und den Leitungswiderstand der DC-Ladeleitungen 18 gering zu halten.

Bevor das Ladekabel 12 von dem Fahrzeug getrennt wird, wird das Ladekabel 12 erneut erwärmt, so dass das Ladekabel 12 einfach von dem Fahrzeug getrennt werden kann. Nach der Trennung des Ladekabels 12 von dem Fahrzeug wird das Erwärmen des Ladekabels 12 beendet.

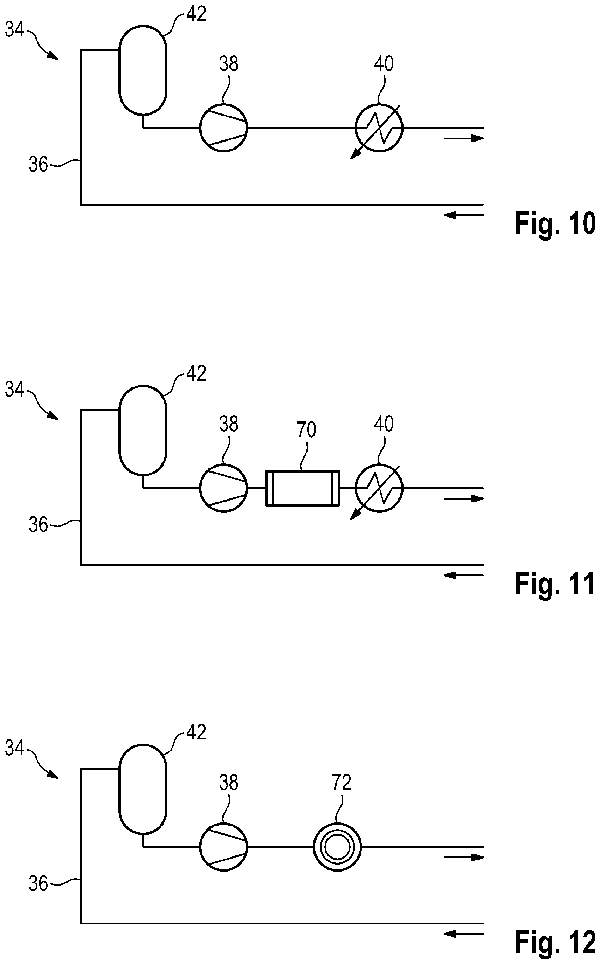

Alternativ umfasst die Schnellladestation 10 der ersten Ausführungsform eine Temperiervorrichtung 34 gemäß einer fünften Ausführungsform, die in Fig. 10 dargestellt ist. Die Temperiervorrichtung 34 der fünften Ausführungsform entspricht weitgehend der Temperiervorrichtung 34 der ersten Ausführungsform, weshalb nachfolgend lediglich Unterschiede zu der Temperiervorrichtung 34 der ersten Ausführungsform beschrieben werden.

Die Temperiervorrichtung 34 der fünften Ausführungsform umfasst im Gegensatz zu der Temperiervorrichtung 34 der ersten Ausführungsform keinen Wärmetauscher 44. Dadurch kann das Fluid lediglich durch die Heizvorrichtung 40 temperiert werden, d.h. das Fluid kann lediglich durch die Heizvorrichtung 40 erwärmt werden. Eine Kühlung des Fluides kann in diesem Ausführungsbeispiel nicht erfolgen.

Weiter alternativ umfasst die Schnellladestation 10 der ersten Ausführungsform eine Temperiervorrichtung 34 gemäß einer sechsten Ausführungsform, die in Fig. 11 dargestellt ist. Die Temperiervorrichtung 34 der sechsten Ausführungsform entspricht weitgehend der Temperiervorrichtung 34 der ersten Ausführungsform, weshalb nachfolgend lediglich Unterschiede zu der Temperiervorrichtung 34 der ersten Ausführungsform beschrieben werden.

Die Temperiervorrichtung 34 der sechsten Ausführungsform umfasst im Gegensatz zu der Temperiervorrichtung 34 statt des Wärmetauschers 44 eine Kühlvorrichtung 70. Ein Primärkreislauf kann entfallen, ebenso wie entsprechende Anschlüsse zum Verbinden mit dem Primärkreislauf. Im Übrigen gelten die obigen Ausführungen entsprechend.

Weiter alternativ umfasst die Schnellladestation 10 der ersten Ausführungsform eine Temperiervorrichtung 34 gemäß einer siebten Ausführungsform, die in Fig. 12 dargestellt ist. Die Temperiervorrichtung 34 der siebten Ausführungsform entspricht weitgehend der Temperiervorrichtung 34 der ersten Ausführungsform, weshalb nachfolgend lediglich Unterschiede zu der Temperiervorrichtung 34 der ersten Ausführungsform beschrieben werden.

Die Temperiervorrichtung 34 der siebten Ausführungsform umfasst im Gegensatz zu der Temperiervorrichtung 34 der ersten Ausführungsform statt des Wärmetauschers 44 eine Wärmepumpe 72. Die Wärmepumpe 72 kann dabei sowohl zum Erwärmen wie auch zum Kühlen des Fluides betrieben werden. Entsprechend umfasst die Temperiervorrichtung 34 der siebten Ausführungsform auch keine Heizvorrichtung 38.

## Patentansprüche

1. Ladekabelvorrichtung (50) für eine Schnellladestation (10) zum Schnellladen einer Batterie eines Fahrzeugs mit einem elektrischen Antrieb mit
einer Temperiervorrichtung (34), und
einem damit verbundenen Ladekabel (12),
wobei das Ladekabel (12) eine Mehrzahl Fluidleitungen (30) aufweist, die sich von einem der Temperiervorrichtung (34) zugewandten Ende des Ladekabels (12) zu einem der Temperiervorrichtung (34) abgewandten Ende erstrecken, und an dem der Temperiervorrichtung (34) abgewandten Ende miteinander verbunden sind,
wobei die Temperiervorrichtung (34) mit den Fluidleitungen (30) des Ladekabels (12) unter Bildung eines Fluidkreislaufs verbunden ist,
**dadurch gekennzeichnet, dass**
die Temperiervorrichtung (50) ausgeführt ist, um zur Reduzierung der Steifigkeit des Ladekabels ein Fluid in dem Fluidkreislauf zu erwärmen,
die Temperiervorrichtung (34) eine Kühlvorrichtung (70) aufweist, um zum Abführen von beim Laden aufgrund von elektrischen Leistungsverlusten anfallender Wärme das Fluid in dem Fluidkreislauf zu kühlen.

2. Ladekabelvorrichtung (50) nach Anspruch 1, **dadurch gekennzeichnet, dass**
die Temperiervorrichtung (34) eine Heizvorrichtung (40) aufweist, um das Fluid in dem Fluidkreislauf zu erwärmen.

3. Ladekabelvorrichtung (50) nach einem der vorhergehenden Ansprüche 1 oder 2, **dadurch gekennzeichnet, dass**
die Temperiervorrichtung (34) eine Wärmetauschervorrichtung (44) aufweist, um das Fluid in dem Fluidkreislauf zu erwärmen.

4. Ladekabelvorrichtung (50) nach einem der vorhergehenden Ansprüche, **dadurch gekennzeichnet, dass** die Temperiervorrichtung (34) eine Wärmepumpenvorrichtung (72) aufweist, um das Fluid in dem Fluidkreislauf zu erwärmen.

5. Ladekabelvorrichtung (50) nach einem der vorhergehenden Ansprüche, **dadurch gekennzeichnet, dass**
die Ladekabelvorrichtung (50) als geschlossene und mit Fluid vorgefüllte Baugruppe zur Montage in der Schnellladestation (10) ausgeführt ist.

6. Ladekabelvorrichtung (50) nach einem der vorhergehenden Ansprüche, **dadurch gekennzeichnet, dass**
die Ladekabelvorrichtung (50) eine Pumpe (38) zur Zirkulation des Fluids in dem Fluidkreislauf und/oder einen Ausgleichsbehälter (42) für das Fluid aufweist.

7. Ladekabelvorrichtung (50) nach einem der vorhergehenden Ansprüche, **dadurch gekennzeichnet, dass**
die Fluidleitungen (30) in dem Ladekabel (12) individuell ausgeführt und separat angeordnet sind oder gemeinsam ausgeführt und koaxial zueinander ausgeführt sind oder jeweils integral mit einem Ladeleiter (18), insbesondere jeweils koaxial innerhalb eines Ladeleiters (18), ausgeführt und angeordnet sind.

8. Schnellladestation (10) zum Schnellladen einer Batterie eines Fahrzeugs mit einem elektrischen Antrieb, **dadurch gekennzeichnet, dass** die Schnellladestation (10) eine
Ladekabelvorrichtung (50) nach einem der vorhergehenden Ansprüche 1-7 aufweist.

9. Verfahren zum Betreiben einer Schnellladestation (10) nach Anspruch 8, mit folgenden Schritten:
Vorwärmen des Ladekabels (12) auf eine Temperatur, die sicherstellt, dass das Ladekabel (12) für eine Verbindung mit einem zu ladenden Fahrzeug erwärmt werden kann,
weiteres Erwärmen des Ladekabels (12) bevor das Ladekabel (12) mit dem Fahrzeug verbunden wird, um dessen Steifigkeit zu reduzieren,
Beenden des Erwärmens des Ladekabels (12), sobald das Ladekabel (12) mit dem Fahrzeug verbunden ist,
Kühlen des Ladekabels (12) nach dem Verbinden des Ladekabels (12) mit dem Fahrzeug, um während des Schnellladens anfallende Verlustwärme abzuführen,
erneutes Erwärmen des Ladekabels (12) bevor das Ladekabel (12) von dem Fahrzeug getrennt wird,
Beenden des erneuten Erwärmens des Ladekabels (12) nach der Trennung des Ladekabels (12) von dem Fahrzeug.

## Claims

1. Charging cable apparatus (50) for a fast-charging station (10) for fast-charging a battery of a vehicle comprising an electric drive, having
a temperature-control apparatus (34), and
a charging cable (12) which is connected thereto,
wherein the charging cable (12) has a plurality of fluid lines (30) which extend from an end of the charging cable (12) that faces the temperature-control- apparatus (34) to an end which is averted from the temperature-control apparatus (34) and, are connected to one another at that end which is averted from the temperature-control apparatus (34),
wherein the temperature-control apparatus (34) is connected to the fluid lines (30) of the charging cable (12) so as to form a fluid circuit,
**characterized in that**
the temperature-control apparatus (50) is designed to heat a fluid in the fluid circuit for the purpose of reducing the stiffness of the charging cable,
the temperature-control apparatus (34) has a cooling apparatus (70) in order to cool the fluid in the fluid circuit for the purpose of dissipating heat which is produced during charging on account of electrical power losses.

2. Charging cable apparatus (50) according.to Claim 1,
**characterized in that**
the temperature-control apparatus (34) has a heating apparatus (40) in order to heat the fluid in the fluid circuit.

3. Charging cable apparatus (50) according to either of the preceding Claims 1 and 2, **characterized in that**
the temperature-control apparatus (34) has a heat exchanger apparatus (44) in order to heat the fluid in the fluid circuit.

4. Charging cable apparatus (50) according to one of the preceding claims, **characterized in that**
the temperature-control apparatus (34) has a heat pump apparatus (72) in order to heat the fluid in the fluid circuit.

5. Charging-cable apparatus (50) according to one of the preceding claims, **characterized in that**
the charging cable apparatus (50) is designed as a closed assembly, which is prefilled with fluid, for mounting in the fast-charging station (10).

6. Charging cable apparatus (50) according to one of the preceding claims, **characterized in that**
the charging cable apparatus (50) has a pump (38) for circulating the fluid in the fluid circuit and/or an equalization container (42) for the fluid.

7. Charging cable apparatus (50) according to one of the preceding claims, **characterized in that**
the fluid lines (30) in the charging cable (12) are designed individually and arranged separately or designed jointly and designed coaxially in relation to one another or are each designed and arranged integrally with a charging conductor (18), in particular in each case coaxially within a charging conductor (18).

8. Fast-charging station (10) for fast-charging a battery of a vehicle comprising an electric drive, **characterized in that**
the fast-charging station (10) has a charging cable apparatus (50) according to one of the preceding Claims 1-7.

9. Method for operating a fast-charging station (10) according to Claim 8, comprising the following steps:
preheating the charging cable (12) to a temperature which ensures that the charging cable (12) for connection to a vehicle to be charged can be heated,
further heating the charging cable (12) before the charging cable (12) is connected to the vehicle in order to reduce the stiffness of the said charging cable,
terminating heating of the charging cable (12) as soon as the charging cable (12) is connected to the vehicle,
cooling the charging cable (12) after connection of the charging cable (12) to the vehicle in order to dissipate waste heat which is produced during fast-charging,
reheating the charging cable (12) before the charging cable (12) is disconnected from the vehicle,
terminating reheating of the charging cable (12) after disconnection of the charging cable (12) from the vehicle.

## Revendications

1. Dispositif de câble de charge (50) pour une station de charge rapide (10) destinée à la charge rapide d'une batterie d'un véhicule doté d'une propulsion électrique, comprenant
un dispositif d'équilibrage thermique (34) et
un câble de charge (12) relié à celui-ci,
le câble de charge (12) possédant une pluralité de conduites de fluide (30) qui s'étendent d'une extrémité du câble de charge (12) faisant face au dispositif d'équilibrage thermique. (34) vers une extrémité à l'opposé du dispositif d'équilibrage thermique (34), et qui sont reliées entre elles au niveau de l'extrémité à l'opposé du dispositif d'équilibrage thermique (34),
le dispositif d'équilibrage thermique (34) étant relié aux conduites de fluide (30) du câble de charge (12) en formant un circuit de fluide,
**caractérisé en ce que**
le dispositif d'équilibrage thermique (50) est réalisé pour chauffer un fluide dans le circuit de fluide en vue de réduire une rigidité du câble de charge,
le dispositif d'équilibrage thermique, (34) possède un dispositif de refroidissement (70) pour refroidir le fluide dans le circuit de fluide afin d'évacuer la chaleur produite lors de la charge en raison des pertes de puissance électriques.

2. Dispositif de câble de charge (50) selon la revendication 1, **caractérisé, en ce que** le dispositif d'équilibrage thermique (34) possède un dispositif de chauffage (34) pour chauffer le fluide dans le circuit de fluide.

3. Dispositif de câble de charge (50) selon l'une des revendications précédentes 1 ou 2, **caractérisé en ce que** le dispositif d'équilibrage thermique (34) possède un dispositif échangeur de chaleur (44) pour, chauffer le fluide dans le circuit de fluide.

4. Dispositif de câble de charge (50) selon l'une des revendications précédentes, **caractérisé en ce que** le dispositif d'équilibrage thermique (34) possède un dispositif pompe à chaleur (72) pour chauffer le fluide dans le circuit de fluide.

5. Dispositif de câble de charge (50) selon l'une des revendications précédentes, **caractérisé en ce que** le dispositif de câble de charge (50) est réalisé sous la forme d'un sous-ensemble fermé et prérempli de fluide destiné au montage dans la station de charge rapide (10).

6. Dispositif de câble de charge (50) selon l'une des revendications précédentes, **caractérisé en ce que** le dispositif de câble de charge (50) possède une pompe (38) servant à la circulation du fluide dans le circuit de fluide et/ou un réservoir compensateur (42) pour le fluide.

7. Dispositif de câble de charge (50) selon l'une des revendications précédentes, **caractérisé en ce que** les conduites de fluide (30) dans le câble de charge (12) sont réalisées individuellement et disposées séparément ou sont réalisées en commun et réalisées de manière coaxiale les unes par rapport aux autres ou sont respectivement réalisées et disposées intégralement avec un conducteur de charge (18),notamment à chaque fois de manière coaxiale à l'intérieur d'un conducteur de charge (18).

8. Station de charge rapide (10) destinée à la charge rapide d'une batterie d'un véhicule doté d'une propulsion électrique, **caractérisée en ce que** la station de charge rapide (10) possède un dispositif de câble de charge (50) selon l'une des revendications 1 à 7.

9. Procédé pour faire fonctionner une station de charge rapide (10) selon la revendication 8, comprenant les étapes suivantes :
préchauffage du câble de charge (12) à une température qui garantit que le câble de charge (12) peut être chauffé pour une liaison avec un véhicule à charger,
chauffage supplémentaire du câble de charge (12) avant, que le câble de charge (12) soit relié au véhicule afin de réduire sa rigidité,
fin du chauffage du câble de charge (12) dès que le câble de charge (12) est relié au véhicule,
refroidissement du câble de charge (12) après avoir relié le câble de charge (12) au véhicule afin d'évacuer la chaleur dissipée qui se produit pendant la charge rapide, nouveau chauffage du câble de charge (12) avant de séparer le câble de charge (12) du véhicule,
fin du nouveau chauffage du câble de charge (12) après avoir séparé le câble de charge (12) du véhicule.
